Europäisches Patentamt

European Patent Office

Office européen des brevets

(11) Publication number: **0 275 633 B1**

# EUROPEAN PATENT SPECIFICATION

(45) Date of publication of patent specification: **29.04.92**  (51) Int. Cl.⁵: **H02H 7/08**, H02H 7/093

(21) Application number: **87309413.0**

(22) Date of filing: **23.10.87**

(54) **Control of multiphase ac motors.**

(30) Priority: **26.11.86 US 935353**

(43) Date of publication of application:
**27.07.88 Bulletin 88/30**

(45) Publication of the grant of the patent:
**29.04.92 Bulletin 92/18**

(84) Designated Contracting States:
**DE ES FR GB IT SE**

(56) References cited:
**EP-A- 0 010 979
EP-A- 0 060 331
GB-A- 2 067 366
US-A- 4 623 826**

(73) Proprietor: **INTERNATIONAL CONTROL AUTO-
MATION FINANCE S.A.
16 Rue des Bains
Ville de Luxembourg(LU)**

(72) Inventor: **Fry, John James
1742 Empire Road
Wickliffe Ohio 44092(US)**
Inventor: **Bastijanic, Edward
7064 Bristlewood Drive
Concord Ohio 44077(US)**
Inventor: **Robertson, John Walter, Jr.
11940 Summers
Chesterland§Ohio 44026(US)**

(74) Representative: **Cotter, Ivan John et al
D. YOUNG & CO. 10 Staple Inn
London WC1V 7RD(GB)**

## Description

This invention relates to controlling multiphase alternating current (AC) motors.

Machines which are powered by alternating current (AC) are used extensively in areas such as industry, home appliances, recreation, etc. The most common of such AC machines is a motor. Many AC motors are able to use multiphase (multiple phase) AC power.

Most multiphase motors are equipped with controllers which alter certain motor operating parameters, such as motor or torque, to fit a particular motor to the demands of the load to which it is being applied. These controllers are most often electronic controlling devices which allow more or less electrical power to be supplied to the motor using known power limiting methods. These electronic controlling devices are very susceptible to current overloads (overcurrents), and therefore severe damage, as the motor demands high levels of power to drive an extremely demanding load.

Two methods have been proposed to prevent damage to electronic motor controllers during a current overload condition. One method employs a protection system that senses the position of the assembly which is being driven by the motor, such as an actuator arm or jackshaft, and relates that to the time taken to move to the new position. The ratio of change in position to time infers whether a current overload is occurring. If the ratio becomes too small, this signals that a current overload is occurring and the motor controller is shut down by the protection system.

The motor or actuator arm positioning method is inexpensive and easily adapted to most positioning applications. However, it also has shortcomings. The protection of this type of overcurrent protection is limited to the time of mechanical feedback from the actuator arm or jackshaft, and electronic overload damage often occurs before the feedback time has elapsed. Also, an overload situation may occur which is not related to the mechanical position of the load, such as a short circuit in the wiring or a short circuit in a winding of the motor. Due to these limitations, the mechanical feedback overload system does not provide adequate protection to electronic motor controllers.

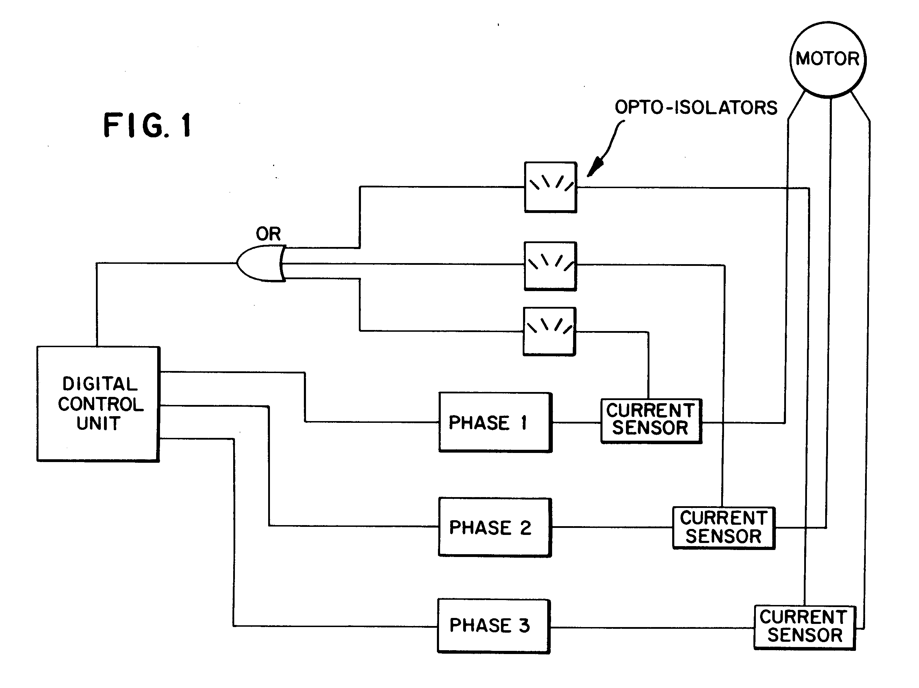

The second method proposed for protecting a motor controller from overcurrent damage is to provide direct current measurement of each phase of the motor being controlled and to shut down the entire motor control system if any of the phase currents goes above a preset safety level. A protection system operating in accordance with the second method is shown in Figure 1 of the accompanying drawings. As shown in Figure 1, a current sensor (current sensing device) is provided for each phase and signals from each current sensor are inputted through a logical OR gate to a digital motor controller (control unit). If a digital high level signal is sent to the digital controller from the OR gate, the digital controller sends a system shutdown signal to the motor and motor controller.

In this overcurrent protection system, each current sensor communicates with the digital controller. However, the digital controller must be protected from the surges of power which commonly occur in the motor control system. The presence of these power surges requires that there be ground isolation between each current sensor and the digital controller. Ground isolation is usually accomplished through Known opto-isolators, as shown in Figure 1, which are expensive. Also, when any of the phase currents of the motor goes above the threshold safety level the entire system is shut down until reset by an operator. Often, this entire motor system down time is unnecessary because only one phase of the motor is in an overcurrent state, and a three phase motor can usually continue running on two phase power.

European Patent Application No. EP-A-0 010 979 discloses an overload protection circuit for a multiphase AC motor that monitors each individual phase for current overload and, if an overcurrent is detected, causes regular repeated interruptions at a frequency typically tens of times higher than the maximum possible motor drive frequency of the current cycle flowing in a phase, thereby allowing the motor to run continuously at a lower overall power consumption than would otherwise be drawn.

US Patent No. US-A-4 623 826 describes a stall shutdown circuit for a DC motor that detects armature rotation. Should the circuit detect that a large current is being drawn by the motor and that armature rotation has ceased, the power supply to the stator windings may be shut-off.

According to one aspect of the invention there is provided a control system for a multiphase AC motor, the system comprising:

a digital control means for controlling the AC motor control system by generating digital pulses;

a multiphase AC power generation assembly connected to the digital control means for generating multiphase AC power and outputting the multiphase AC power to the motor, the generation assembly including one overcurrent means for each individual phase of the multiphase AC power such that one individual phase may be disabled without disabling the remaining individual phases, wherein each overcurrent means includes a current sensing means for sensing the AC current of the associated phase of power and producing a signal indicative thereof, a comparator for comparing the signal produced by the current sensing means with a preset safety signal and creating a disabling signal if the signal produced by the current sensing means exceeds the preset safety signal, and a timing means for receiving said disabling signal and disabling the associated phase for a preset first time period; and

a mechanical feedback means attached through a load to the motor for disabling the entire AC motor control system through the digital control means when the motor stalls for a preset second time period, indicating a severe overcurrent condition in the motor control system.

According to another aspect of the invention there is provided a method of operating a control system for a multiphase AC motor, the method comprising:

generating multiphase AC power;

monitoring each phase of the generated AC power individually for an overcurrent condition;

driving the motor with the generated multiphase power;

if an overcurrent condition is detected in one phase of the AC power as a result of the monitoring, disabling that one phase of the AC power for a preset first time period separately from the other phases and driving the motor with the remaining phases in which no overcurrent condition is detected as a result of the monitoring; and

if mechanical feedback from a load driven by the motor indicates a severe overcurrent condition for a preset second time period, disabling the entire motor control system.

The problems associated with the previously proposed mechanical feedback and direct current measurement methods of overcurrent protection of AC motor control systems are overcome by providing a separate overcurrent means for each phase of the AC power used in the AC motor whereby overcurrents in any phase are reliably detected yet the control system is not shut down in the event of an overcurrent in a single phase. However, the entire control system is shut down in the event of a severe fault, due to the action of the feedback means. Consequently, the control system is provided with an adequate degree of protection.

An AC motor control system according to a preferred embodiment of the invention is described in detail below with reference to the accompanying drawings, but will first be described in outline. The control system includes a low cost overcurrent protection or fault detection arrangement having a separate shut-down mechanism for each phase of the power supplied to the AC motor, each mechanism being controlled by or sending a shut down signal to a digital controller of the motor control system. (Each mechanism is in no way linked to the digital controller, being independent of the rest of the protection arrangement.) A single phase of three-phase power may be shut down by the system temporarily without shutting down the entire AC motor control system. However, the overcurrent protection arrangement is also provided with a mechanical feedback apparatus which sends a total shut down signal to the digital controller only if the AC motor stalls to provide protection for the most severe overcurrent conditions. The operator must then reset the system manually. Thus, each phase of power is protected from temporary or minor overcurrent conditions without a total system shutdown. However, the entire system is completely shut down in the event of a severe overcurrent condition.

The invention will now be further described, by way of illustrative and non-limiting example, with reference to the accompanying drawings, in which:

Figure 1 is a schematic drawing of a previously proposed overcurrent protection system employing direct current measurement;

Figure 2 is a schematic drawing of a control system for an AC motor, the system including an overcurrent protection arrangement including an individual overcurrent protection assembly for each phase of the AC power; and

Figure 3 is a schematic drawing of one of the individual overcurrent protection assemblies of Figure 2.

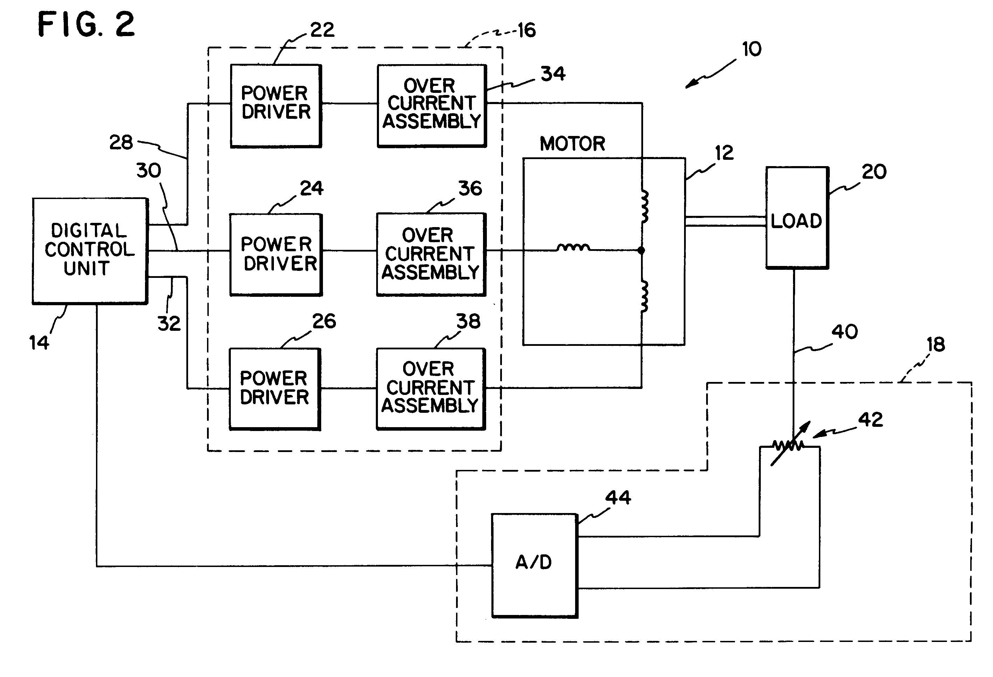

Figure 2 shows a control system 10 for a three-phase AC motor 12, the system 10 being provided with an overcurrent protection (fault detection) arrangement. The system 10 comprises a digital control unit 14, a three-phase AC power generation assembly or system 16, and a mechanical feedback system 18 connected to a load 20 driven by the motor 12. The mechanical feedback system 18 forms part of the overcurrent protection arrangement mentioned above.

The digital control unit 154 is connected to power drivers 22, 24, 26 of the AC power system 16 along three lines 28, 30, 32, respectively. The power drivers 22, 24, 26 are connected to overcurrent protection assemblies 34, 36, 38, respectively, which assemblies also form part of the overcurrent protection arrangement mentioned above. The overcurrent protection assemblies 34, 36, 38 are inputted to the motor 12.

The mechanical feedback system 18 includes a feedback member 40 connected to the load 20 and a feedback transducer 42 attached to the member 40. The transducer 42 is connected to an analog-to-digital (A/D) convertor 44 which is in turn connected to the digital control unit 14.

In operation, the digital control unit 14 sends digital pulses along the lines 28, 30, 32 which enable each of the power drivers 22, 24, 26 to generate single phase alternating current. The digital control unit 14 is known microprocessor which is able to store and execute control algorithms. The AC current produced by each power driver 22, 24, 26 is monitored by its own respective overcurrent protection assembly 34, 36, 38. The three AC currents are inputted to the motor 12 where, together, they become the three-phase power required to run the motor. The operation of the power drivers 22, 24, 26 and the overcurrent protection assemblies 34, 36, 38 are discussed below.

If the AC current level of any one of the power drivers 22, 24, 26 surpasses a threshold safety level, its respective overcurrent protection assembly 34, 36, 38 does not allow the power driver to produce AC current. After a preset time period the power driver 22, 24, 26 again begins producing AC current and, if the overcurrent condition is still apparent, it again is disallowed from producing AC current.

The overcurrent devices 34, 36, 38 operate separately, allowing any of the power drivers 22, 24, 26 to be prevented from producing AC current while the other two power drivers are still operating. The entire system is able to maintain operation if the overcurrent condition is minor, because a three-phase motor often will continue operation on two phase power. No down time is then experienced due to a minor or temporary overcurrent condition in the controls of a single phase of the three phase power output to the motor 12.

If a severe overcurrent condition exists, two or all three of the overcurrent assemblies 34, 36, 38 will prevent their respective power drivers 22, 24, 26 from operating. As each phase of the three-phase motor 12 is removed, the motor's potential to stall becomes greater depending upon the magnitude of the load 20. When the motor 12 does stall, this is sensed by the transducer 42 through the cessation of movement by the feedback member 40. The transducer 42 is a variable resistance potentiometer having a wiper attached to the feedback member 40. The feedback member 40 is a mechanical linkage to the load 20, such as an actuator arm attached to a damper in an airduct (not shown). The A/D convertor 44 is a known analog to digital conversion circuit which converts the position of the transducer 42 to digital pulses and transmits them to the digital control unit 14.

If the feedback member 40 remains in a fixed position for a set period of time, as sensed by the digital control unit 14 through the transducer 42 and the A/D convertor 44, indicating a stalled condition, the entire system is shut down by the digital control unit 14. This fixed period of time is usually 7 seconds. An operator then must reset the motor control system 10 after investigating and correcting the severe overcurrent condition. This provides an entire system shutdown if the digital control unit 14 enables the motor control system 10 and the motor 12 is in a stalled condition or an extreme overcurrent condition exists in the AC power system 16.

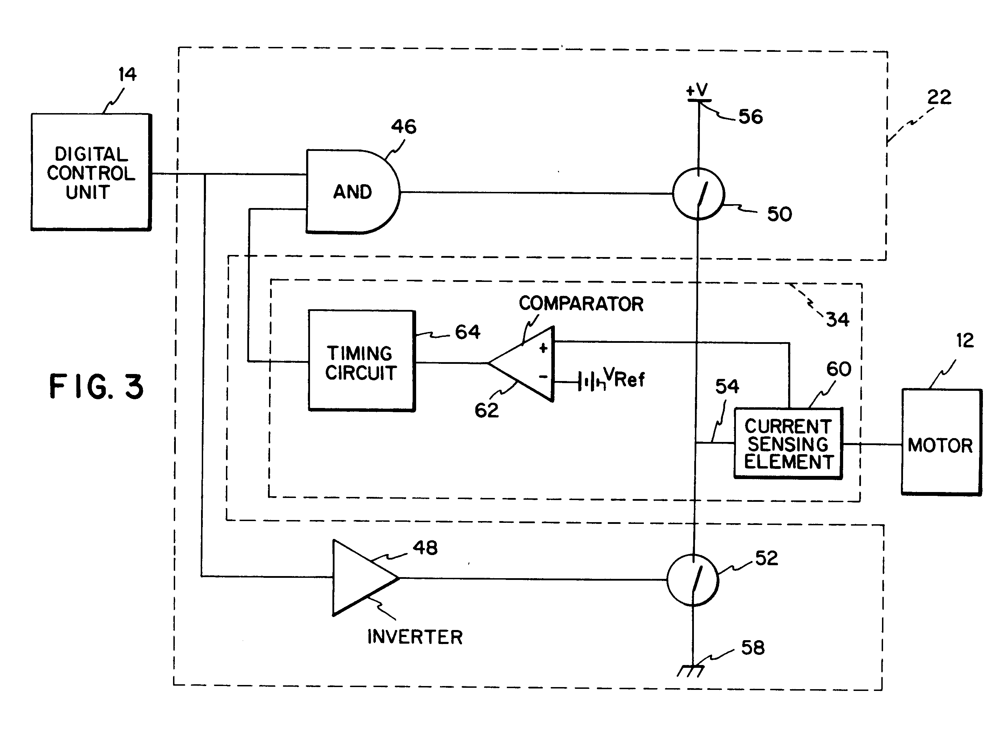

Figure 3 is a schematic diagram of one of the overcurrent assemblies 34, 36, 38 (hereinafter 34) and one of the power drivers 22, 24, 26 (hereinafter 22). In normal operation of the power driver 22, the digital control unit 14 sends the same digital pulses to a first input of an AND gate 46 and to an INVERTED gate 48 of the power driver 22. The gates 46 and 48 are formed by known integrated circuits commonly found in seminconductor chips. Normally the second input of the AND gate 46 is at a logical high level. Therefore, the logical output of the AND gate 46 is normally opposite to the logical output of the INVERTER gate 48. The outputs of the gates 46 and 48 are sent to known metal oxide semiconductor field effect transistor (MOSFET) power switches 50 and 52, respectively. The MOSFETs 50, 52 are enabled alternately by the signals sent from the gates 46 and 48, creating an alternating current on a line 54 from a DC power supply 56 and common 58.

The overcurrent assembly 34 includes a current sensing element 60 connected to one input of a known operational amplifier comparator circuit 62. The comparator 62 is connected to a known resistivecapacitive (RC) timing circuit 64 which is connected to the second input of the AND gate 46. The current sensing element 60 may be any known current sensing device, such as a Hall effect sensor or a current sensing resistor.

In operation, the current sensing element 60 senses the level of current being outputted by the power driver 22 and sends a voltage signal indicative of the current level to a non-inverting (positive) input of the comparator 62. An inverting (negative) input of the comparator 62 is connected to a safety reference voltage $V_{Ref}$. If the voltage level from the current sensing element 60 exceeds the safety reference voltage $V_{Ref}$, the comparator 62 outputs an energise signal to the timing circuit 64.

In normal operation, the timing circuit 64 outputs a constant digital high level signal to the AND gate 46, enabling the power driver 22. However, when the timing circuit 64 is energised by the comparator 62 it will output a digital low level signal to the AND gate 46, disabling the power driver 22. The timing circuit 64 normally disables the power driver for 20 seconds, after which the power driver goes back on line. Hence, the power driver 22, which creates one phase of the three-phase AC power, is disabled separately from the other two power drivers 24 and 26 without being controlled by the digital controller 14.

## Claims

1. A control system (10) for a multiphase AC motor (12), the system comprising:

   a digital control means (14) for controlling the AC motor control system (10) by generating digital pulses;

   a multiphase AC power generation assembly (16) connected to the digital control means (14) for generating multiphase AC power and outputting the multiphase AC power to the motor (12), the generation assembly (16) including one overcurrent means (34, 36, 38) for each individual phase of the multiphase AC power such that one individual phase may be disabled without disabling the remaining individual phases, wherein each overcurrent means (34, 36, 38) includes a current sensing means (60) for sensing the AC current of the associated phase of power and producing a signal indicative thereof, a comparator (62) for comparing the signal produced by the current sensing means (60) with a preset safety signal ($V_{Ref}$) and creating a disabling signal if the signal produced by the current sensing means (60) exceeds the preset safety signal, and a timing means (64) for receiving said disabling signal and disabling the associated phase for a preset first time period; and

   a mechanical feedback means (18) attached through a load (20) to the motor (12) for disabling the entire AC motor control system (10) through the digital control means (14) when the motor (12) stalls for a preset second time period, indicating a severe overcurrent condition in the motor control system.

2. A system according to claim 1, wherein the multiphase AC power generation assembly (16) includes a separate power driving means (22, 24, 26) for generating each phase of the multiphase power.

3. A system according to claim 2, wherein each power driving means (22, 24, 26) includes a logical AND gate (46) and a logical INVERTER gate (48) for receiving the same alternating digital pulse signal from the digital control means (14) and outputting two alternating digital signals always opposite in logical value from each other.

4. A system according to claim 3, wherein each power driving means (22, 24, 26) includes two metal oxide semiconductor field effect transistor power switches (50, 52) each connected to receive one of said two alternating digital signals and to create AC current from a DC power supply (56) and a common (58) by switching according to said digital signals.

5. A system according to any one of the preceding claims, wherein the mechanical feedback means (18) includes a mechanical transducer (42) for sensing movement and converting the movement to an analog electrical signal and an analog to digital converter (44) for converting the analog signal to a digital signal and outputting the digital signal to the digital control means (14).

6. A system according to any one of the preceding claims, wherein the digital control means (14) is a microprocessor.

7. A method of operating a control system (10) for a multiphase AC motor (12), the method comprising:

   generating (16) multiphase AC power;

   monitoring (34, 36, 38) each phase of the generated AC power individually for an overcurrent condition;

   driving the motor (12) with the generated multiphase power;

   if an overcurrent condition is detected in one phase of the AC power as a result of the monitoring (34, 36, 38), disabling that one phase of the AC power for a preset first time period separately from the other phases and driving the motor (12) with the remaining phases in which no overcurrent condition is detected as a result of the monitoring (34, 36, 38); and

   if mechanical feedback (18) from a load (20) driven by the motor (12) indicates a severe overcurrent condition for a preset second time period, disabling the entire motor control system (10).

## Revendications

1. Système de commande (10) pour un moteur à courant alternatif polyphasé (12), le système comprenant :

   un moyen de commande numérique (14) pour commander le système de commande (10) du moteur à courant alternatif en produisant des impulsions numériques ;

   un ensemble de production (16) de courant alternatif polyphasé connecté au moyen de commande numérique (14) pour produire un courant alternatif polyphasé et sortir le courant alternatif polyphasé vers le moteur (12), l'ensemble de production (16) comprenant un moyen de protection contre les surintensités (34, 36, 38) pour chaque phase individuelle du courant alternatif polyphasé de sorte qu'une phase individuelle puisse être désactivée sans désactiver les phases individuelles restantes, dans lequel chaque moyen de protection contre les surintensités (34, 36, 38) comprend un moyen de détection de courant (60) pour détecter le courant alternatif de la phase de courant associée et pour produire un signal indicatif de celui-ci, un comparateur (62) pour comparer le signal produit par le moyen de détection de courant (60) avec un signal de sécurité predéterminé ($V_{Ref}$) et pour créer un signal de désactivation si le signal produit par le moyen de détection de courant (60) dépasse le signal de sécurité prédéterminé, et un moyen de temporisation (64) pour recevoir ledit signal de désactivation et désactiver la phase associée pendant une période de temps prédéterminée ; et

un moyen de réaction mécanique (18) fixé par l'intermédiaire d'une charge (20) au moteur (12) pour désactiver l'ensemble du système de commande (10) du moteur à courant alternatif à l'aide du moyen de commande numérique (14) lorsque le moteur (12) se bloque pendant une seconde période de temps prédéterminée, ce qui indique un état de surintensité sérieux dans le système de commande du moteur.

2. Système selon la revendication 1, dans lequel l'ensemble de production de courant alternatif polyphasé (16) comprend un moyen de pilotage de courant distinct (22, 24, 26) pour produire chacune des phases d'un courant polyphasé.

3. Système selon la revendication 2, dans lequel chacun des moyens de pilotage de courant (22, 24, 26) comprend une porte logique ET (46) et une porte logique inverseur (48) pour recevoir le même signal d'impulsions numérique alternatif du moyen de commande numérique (14) et pour sortir deux signaux numériques alternatifs qui sont toujours d'une valeur logique opposée l'un à l'autre.

4. Système selon la revendication 3, dans lequel chacun des moyens de pilotage de courant (22, 24, 26) comprend deux commutateurs de courant (50, 52) chacun connecté de manière à recevoir l'un desdits deux signaux numériques alternatifs et à créer un courant alternatif à partir d'une alimentation en courant continu (56) et d'un point commun (58) par commutation en fonction desdits signaux numériques.

5. Système selon l'une quelconque des revendications précédentes, dans lequel le moyen de réaction mécanique (18) comprend un transducteur mécanique (42) pour détecter le mouvement et pour convertir le mouvement en un signal électrique analogique et un convertisseur analogique vers numérique (44) pour convertir le signal analogique en un signal numérique et pour sortir le signal numérique vers le moyen de commande numérique (14).

6. Système selon l'une quelconque des revendications précédentes, dans lequel le moyen de commande numérique (14) est un microprocesseur.

7. Procédé de mise en oeuvre d'un système de commande 10) pour un moteur à courant alternatif polyphasé (12), le procédé comprenant :

la production (16) d'un courant alternatif polyphasé ;

le contrôle (34, 36, 38) de chaque phase du courant alternatif polyphasé individuellement pour détecter un état de surintensité ;

l'entraînement du moteur (12) avec le courant polyphasé produit ;

si un état de surintensité est détecté dans l'une des phases du courant alternatif, comme résultat du contrôle (34, 36, 38), la désactivation de ladite une phase du courant alternatif pendant une première période de temps prédéterminée, indépendamment des autres phases et l'entraînement du moteur (12) avec les phases restantes dans lesquelles aucun état de surintensité n'est détecté comme résultat du contrôle (34, 36, 38) ; et

si une réaction mécanique (18) d'une charge (20) entraînée par le moteur (12) indique un état de surintensité sérieux pendant une seconde période de temps prédéterminée, désactivation de l'ensemble du système de commande du moteur (10).

**Patentansprüche**

1. Regelsystem (1ß) für einen mehrphasigen Wechselstrommotor (12), wobei das System aufweist:

eine digitale Regeleinrichtung (14) zum Regeln des Wechselstrommotorregelsystems (10) durch die Erzeugung von digitalen Impulsen, eine Erzeugungseinrichtung (16) für mehrphasige Wechselstromenergie, welche mit der digitalen Regeleinrichtung (14) verbunden ist, um mehrphasige Wechselstromenergie zu erzeugen und um die mehrphasige Wechselstromenergie an den Motor (12) abzugeben, wobei die Erzeugungseinrichtung (16) eine Überstromeinrichtung (34, 36, 38) für jede einzelne Phase der mehrphasigen Wechselstromenergie einschließt, so daß eine einzelne Phaseaußer Betrieb gesetzt bzw. abgeschaltet werden kann, ohne daß die verbleibenden Phasen abgeschaltet werden, wobei jede Überstromeinrichtung (34, 36, 38) eine Stromabfühleinrichtung (60) zum Abfühlen des Wechselstromes der zugehörigen Strombzw. Energiephase aufweist, und um ein Signal zu erzeugen, was diesen anzeigt, einen Komparator (62) aufweist, um das durch die Stromabfühleinrichtung (60) erzeugte Signal mit einem zuvor eingestellten Sicherheitssignal ($V_{Ref}$) zu vergleichen und um ein Abschaltsignal zu erzeugen, wenn das von der Sfromabfüleinrichtung (60) erzeugte Stromsignal das vorher eingestellte Sicherheitssignal übersteigt, und eine Zeitgebereinrichtung (64) aufweist, um das Abschaltsignal aufzunehmen und die zugehörige Phase für eine zuvor festgelegte erste Zeitdauer abzuschalten, und
eine mechanische Rückkopplungseinrichtung (18), welche über eine Last (20) an dem Motor (12) angebracht ist, um das gesamte Regelsystem (10) des Wechselstrommotors über die digitale Steuereinrichtung (14) abzuschalten, wenn der Motor (12) für eine vorgewählte zweite Zeitdauer stehengeblieben ist, was ein Zeichen für einen ernstzunehmenden Überstromzustand in dem Motorregelsystem ist.

2. System nach Anspruch 1, wobei die Erzeugungseinrichtung (16) für die mehrphasige Wechselstromenergie eine getrennte Energietreibereinrichtung (22, 24, 26) aufweist, um jede Phase der mehrphasigen Energie zu erzeugen.

3. System nach Anspruch 2, wobei jede Energietreibereinrichtung (22, 24, 26) ein logisches UND-Tor (46) und ein logisches INVERTER-Tor (48) aufweist, um dasselbe wechselnde digitale impulssignal von der digitalen Steuereinrichtung (14) zu empfangen und um zwei wechselnde Steuersignale herauszugeben, die in ihrem logischen Wert immer entgegengesetzt zueinander sind.

4. System nach Anspruch 3, wobei jeder Energietreibereinrichtung (22, 24, 26) zwei MOSFET-Energieschalter (50, 52) (Metalloxidhalbleiterfeldeffekttransistorschalter) aufweist, die jeweils so angeschlossen sind, daß sie eines der zwei wechselnden Digitalsignale empfangen und einen Wechselstrom aus einer Gleichstromernergiezufuhr (56) und einer gemeinsamen Leitung (58) erzeugen, indem sie entsprechend den digitalen Signalen schalten.

5. System nach einem der vorstehenden Ansprüche, wobei die mechanische Rückkopplungseinrichtung (18) einen mechanischen Übertrager (42) aufweist, um eine Bewegung zu erfassen und um die Bewegung in ein analoges elektrisches Signal umzusetzen und einen Analog-Digitalumsetzer (44) aufweist, um das analoge Signal in ein digitales Signal umzusetzen und um das digitale Signal an die digitale Steuereinrichtung (14) auszugeben.

6. System nach einem der vorstehenden Ansprüche, wobei die digitale Steuereinrichtung (14) ein Mikroprozessor ist.

7. Verfahren zum Betreiben eines Regelsystems (12) für einen mehrphasigen Wechselstrommotor (12), wobei das Verfahren aufweist:
Erzeugen (16) einer mehrphasigen Wechselstromenergie,
Überwachen (34, 36, 38) jeder Phase der erzeugten Wechselstromenergie jeweils für sich auf einen Überstromzustand,
Antreiben des Motors (12) mit der erzeugten mehrphasigen Energie,
Abschalten dieser einen Phase der Wechselstromenergie für eine zuvor eingestellte erste Zeitdauer getrennt von den anderen Phasen, wenn ein Überstromzustand in einer Phase der Wechselstromenergie als Ergebnis der Überwachung (34, 36, 38) festgestellt worden ist, und Antreiben des Motors (12) mit den verbleibenden Phasen, in welchen kein Überstromzustand als Ergebnis der Überwachung (34, 36, 38) erfaßt worden ist, und
falls die mechanische Rückkopplung (18) von einer Last (20), welche durch den Motor (12) angetrieben wird, einen ernsthaften Überstromzustand während einer zuvor festgelegten zweiten Zeitdauer anzeigt, Abschalten des gesamten Motorregelsystems (10).

FIG. 1

FIG. 2

FIG. 3